# EUROPEAN PATENT APPLICATION

(11) **EP 1 837 809 A1**
(43) Date of publication of application: **26.09.2007**
(21) Application number: 05703439.9
(22) Date of filing: 11.01.2005
(51) Int. Cl.: G06K 19/00, G09F 3/18, B42D 15/10

(54) **IC TAG STORING CASE**

(71) Applicant: Fujitsu Ltd., Kawasaki-shi, Kanagawa 211-8588 (JP)
(72) Inventor: FURUTANI, Nagahisa, c/o FUJITSU LIMITED, Kawasaki-shi, Kanagawa 2118588 (JP)
(74) Representative: Kreutzer, Ulrich
(86) International application number: PCT/JP2005/000200
(87) International publication number: WO 2006/075359

(57) **Abstract**

The present invention relates to an IC tag housing case (95) configured to house an IC tag (41) therein, and the objective thereof is to accurately exchange information between an IC tag and a reader/writer without increasing costs for an IC tag. To this end, an IC tag housing case is configured to include a lid body (35) formed of a material that allows electromagnetic waves to pass therethrough, and a case body (31) having a space portion where an IC tag is housed and formed of a high magnetic permeability material.

## Description

### BACKGROUND OF THE INVENTION

### 1. Field of the Invention

The present invention relates to an IC tag housing case that houses an IC tag.

### 2. Description of the Related Art

Currently, it is being carried out in order to improve business efficiency that an IC tag (also known as an RFID tag) is attached on a product, a physical object, or the like (referred to as simply an "object", hereinafter) subjected to information management by a computer thereby to read the information from the IC tag via a reader/writer. The IC tag (shipping tag) stores ID (identification information) in a small IC chip, and exchanges (writes or reads) information through radiowaves between the IC chip and the reader/writer. The IC tag receives electromagnetic waves carrying a signal from the reader/writer, converts received electric power into a DC voltage, and applies the voltage on the IC chip, thereby to write or read information simultaneously. Such an IC tag has an advantage in that the IC tag can be readily implemented when even a small space is available; the IC tag is difficult to be replicated or counterfeited; and the IC tag can eliminate the necessity of an electric power source due to its capability of operating on electric power supplied through contactless transfer. Additionally, when plural IC tags are attached respectively on plural objects, it becomes possible to collectively read all the information of the plural objects.

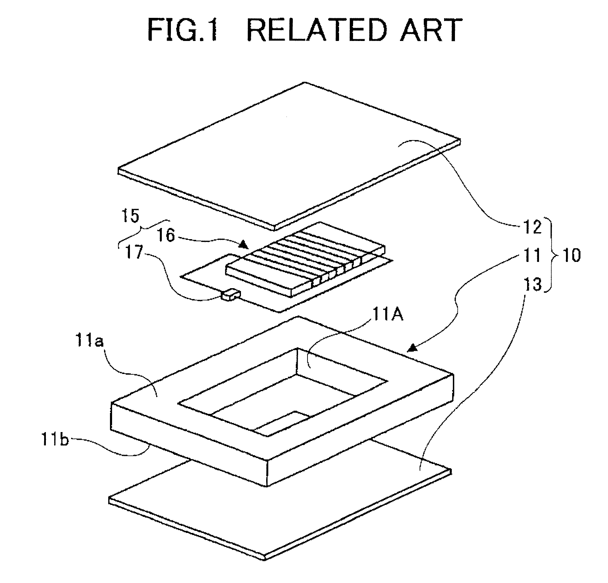

As an example of means to protect the IC tag from humidity, dust, or the like in atmosphere, there has been an IC tag housing case 10 shown in FIG. 1, which is an exploded perspective view of a related art IC tag housing case.

As shown in FIG. 1, the IC tag housing case 10 is composed of a middle plate 11, an upper plate 12, and a lower plate 13. The middle plate 11 is provided with a through portion 11A, which is to house an IC tag 15 composed of an antenna coil 16 and an IC chip 17 connected to the antenna coil 16. The upper plate 12 is to be mounted on the middle plate 11 from an upper surface 11a of the middle plate 11 so as to cover the through portion 11A. The lower plate 13 is to be mounted on the middle plate 11 from a lower surface 11b of the middle plate 11 so as to cover the through portion 11A. The middle plate 11, the upper plate 12, and the lower plate 13 each has flexibility and thus the IC tag housing case 10 can be relatively easily attached even on a non-flat surface of the object (See, patent-related document 1 below).
[Patent-related document 1] Japanese Patent Application Laid-open Publication No. 2002-245430.

### SUMMARY OF THE INVENTION

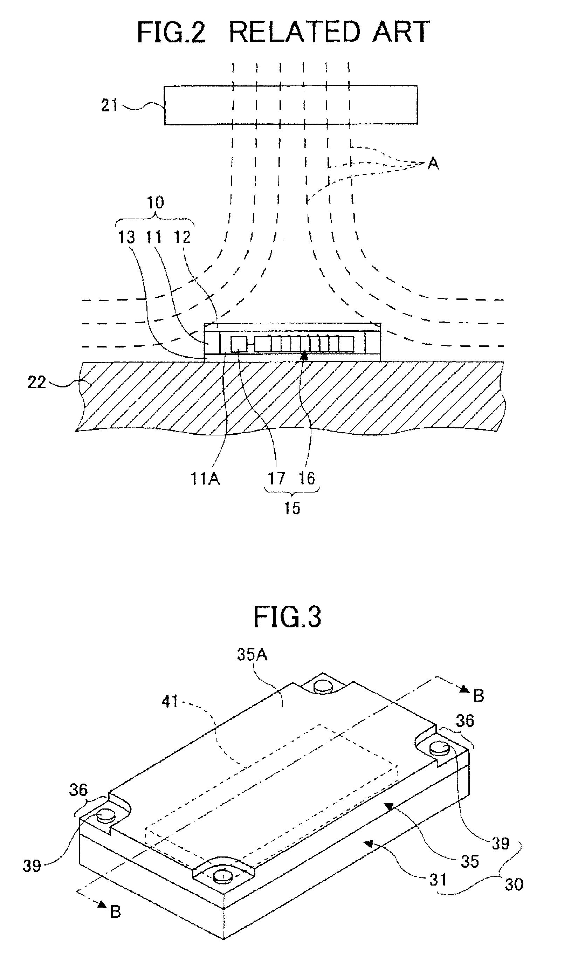

FIG. 2 illustrates a magnetic field distribution when an IC tag is housed in a related art IC tag housing case which is then attached on a metal object.

As shown in FIG. 2, when the IC tag 15 is brought near (or contacts) the metal object 22, eddy current loss due to a magnetic field is caused on a surface of the metal object 22, which prevents magnetic flux A from passing through the IC tag 15. Therefore, when the IC tag 15 is applied to the metal object 22, a problem arises that precludes an exchange of information between the IC tag 15 and the reader/writer 21.

As a solution to such a problem, it is known that a high magnetic permeability material may be provided on an IC tag (See, Japanese Patent Application Laid-Open Publication No. 2003-46321). However, in this case, the high magnetic permeability material has to be provided on every IC tag 15, which causes a problem of increased costs for the IC tag.

A general objective of the present invention is to provide an improved, useful IC tag housing case that solves the above problem of the related art.

A more specific objective of the present invention is to provide an IC tag housing case that allows for exchanging information accurately between the IC tag and the reader/writer without increasing costs for the IC tag.

In order to achieve the objective, an IC tag housing case that houses an IC tag includes a high magnetic permeability member made of a high magnetic permeability material and provided so as to oppose the IC tag housed therein.

According to such an IC tag housing case, since the high magnetic permeability member made of a high magnetic permeability material is provided and the IC tag housing case is attached on a metal object so that the high magnetic permeability member is disposed so as to oppose the metal object, magnetic flux produced by electromagnetic waves generated from a reader/writer is converged on (or, passes through) the IC tag housed in the IC tag housing case, regardless of a material of the object. Therefore, sufficient electromotive force is obtained and thus accurate exchanges of information are carried out between the IC tag and the reader/writer.

By the way, although a high magnetic permeability material is allegedly defined as a magnetic material having a relative magnetic permeability of 100 or more, the high magnetic permeability material here can have a relative magnetic permeability of from 1,000 to 800,000 in the present invention.

When configured as above, information exchanges can be accurately conducted between the IC tag and the reader/writer, regardless of the material of the object.

The high magnetic permeability material may include at least one of a group consisting of permalloy, nickel, and cobalt in the above invention.

When configured as above, at least one of a group consisting of permalloy, nickel, and cobalt can be used.

In the above invention, an antenna composed of a passive component is provided on a surface on which the high magnetic permeability member is not provided.

When the above configuration is adopted, electromagnetic waves from the reader/writer are received by the antenna composed of a passive component and electromagnetic coupling between the antenna and the IC tag is established, thereby enabling an extended coverage range therebetween. Therefore, information exchanges between the IC tag and the reader/writer can be accurately carried out.

In order to achieve the above objective, an IC tag housing case includes a case body having a space portion configured to house an IC tag therein and formed of a high magnetic permeability material, and a lid body arranged so as to cover the space portion and subjected to incoming electromagnetic waves.

According to such an IC tag housing case, since the case body is configured of a high magnetic permeability material and the IC tag housing case is attached on a metal object so as to oppose the metal object, magnetic flux produced by electromagnetic waves from a reader/writer is converged on the IC tag (passes through) the IC tag, regardless of the material of the object, thereby to obtain electromotive force and thus allow for accurate information exchanges between the IC tag and the reader/writer.

A relative magnetic permeability of the high magnetic permeability material here may be from 1,000 to 800,000 in the above invention.

When configured as above, information exchanges can be accurately conducted between the IC tag and the reader/writer, regardless of the material of the object.

The high magnetic permeability material may include at least one of a group consisting of permalloy, nickel, and cobalt in the above invention.

When configured as above, at least one of a group consisting of permalloy, nickel, and cobalt can be used.

The lid body may be configured as attachable to and detachable from the case body in the above invention.

When configured as above, an IC tag that has once been housed in the IC tag housing case can be replaced with another IC tag, which allows for an adaptable use of one IC tag housing case for plural IC tags.

The lid body may be provided with an antenna composed of a passive component in the above invention.

When configured as above, since electromagnetic waves from the reader/writer are received by the antenna composed of a passive component and electromagnetic coupling between the antenna and the IC tag is established, the coverage range therebetween is expanded, thereby allowing for accurate information exchanges between the IC tag and the reader/writer.

In order to achieve the above objective, another aspect of the present invention is characterized in that the IC tag housing case is comprised of a case body having a space portion configured to house an IC tag therein; a lid body arranged to cover the space portion and subjected to incoming electromagnetic waves; and a high magnetic permeability member formed of a high magnetic permeability material and provided in the case body so as to oppose the IC tag.

According to such an IC tag housing case, since the case body is provided with the high magnetic permeability member composed of a high magnetic permeability material and the IC tag housing case is attached on a metal object so that the case body opposes the metal object, magnetic flux produced by electromagnetic waves generated from a reader/writer is converged on (or passes through) the IC tag housed in the IC tag housing case, regardless of the material of the object. Therefore, sufficient electromotive force is obtained and thus accurate exchanges of information are carried out between the IC tag and the reader/writer.

A relative magnetic permeability of the high magnetic permeability material here may be from 1,000 to 800,000 in the above invention.

When configured as above, information exchanges can be accurately conducted between the IC tag and the reader/writer, regardless of the material of the object.

The high magnetic permeability material may include at least one of a group consisting of permalloy, nickel, and cobalt in the above invention.

When configured as above, at least one of a group consisting of permalloy, nickel, and cobalt can be used.

The lid body may be configured as attachable to and detachable from the case body in the above invention.

When configured as above, an IC tag that has once been housed in the IC tag housing case can be replaced with another IC tag, which allows for an adaptable use of one IC tag housing case for plural IC tags.

The lid body may be provided with an antenna composed of a passive component in the present invention.

When configured as above, since electromagnetic waves from the reader/writer are received by the antenna composed of a passive component and electromagnetic coupling between the antenna and the IC tag is established, a coverage range therebetween is expanded, thereby allowing for accurate information exchanges between the IC tag and the reader/writer.

The present invention provides an advantage in that information is accurately exchanged between the IC tag and the IC tag reader/writer, without increasing costs for the IC tag.

### BRIEF DESCRIPTION OF THE DRAWINGS

FIG. 1 is an exploded perspective view of a related art IC tag housing case in which an IC tag is housed.
FIG. 2 illustrates a magnetic field distribution when an IC tag is housed in a related art IC tag housing case which is then attached on a metal object.
FIG. 3 is a perspective view of an IC tag housing case according to a first embodiment of the present invention, where an IC is housed.
FIG. 4 is a cross-sectional view taken along a B-B line of a structure (the IC tag and the IC tag housing case) shown in FIG. 3.
FIG. 5 is an exploded perspective view of the structure shown in FIG. 3.
FIG. 6 is a schematic view of magnetic flux distribution between an IC tag and a reader/writer when the IC tag housing case of the first embodiment, where the IC tag is housed, is disposed on a metal object.
FIG. 7 illustrates an IC tag housing case having an adhesive material serving as an attachment thereof on an object.
FIG. 8 is a perspective view of an IC tag housing case according to a second embodiment, where an IC tag is housed.
FIG. 9 is a cross-sectional view taken along an E-E line of a structure (an IC tag and an IC tag housing case) shown in FIG. 8.
FIG. 10 is an exploded perspective view of the structure shown in FIG. 8.
FIG. 11 is a perspective view of an IC tag housing case according to a third embodiment, where an IC tag is housed.
FIG. 12 is a cross-sectional view taken along an F-F line of a structure (an IC tag and an IC tag housing case) shown in FIG. 11.
FIG. 13 is an exploded perspective view of the structure shown in FIG. 11.
FIG. 14 is a perspective view of an IC tag housing case according to a fourth embodiment, where an IC tag is housed.
FIG. 15 is an exploded perspective view of a structure shown in FIG. 14.
FIG. 16 is a perspective view of another IC tag housing case having a waveguide antenna.
FIG. 17 is a perspective view of yet another IC tag housing case having a waveguide antenna.

### DESCRIPTION OF REFERENCE NUMERALS

10, 30, 60, 70, 80, 90, 95 IC tag housing case; 11 middle plate; 11A through portion; 11a, 81A upper surface; 11b, 81B lower surface; 12 upper plate; 13 lower plate; 15, 41 IC tag; 16 antenna coil; 17, 44 IC chip; 21, 47 reader/writer; 22, 48 metal object; 31, 71 case body; 31B, 71A bottom plate portion; 32, 72 space portion for an IC tag; 33, 65, 67, 74 screw hole; 35, 81 lid body; 36 recess portion; 37, 82 through hole; 39 screw; 42 base material; 43 antenna; 45 encapsulation resin; 61 frame body; 62 bottom plate; 64 through portion; 73 high magnetic permeability member; 85 waveguide antenna; 86 capacitance portion (for an adjustment of resonance frequency); 87 antenna portion; A, C magnetic flux; D1, D2 depth; T1 through T5 thickness.

### DETAILED DESCRIPTION OF THE PREFERRED EMBODIMENTS

Next, there will be described preferred embodiments for carrying out the present invention referring to the drawings.

### A First Embodiment

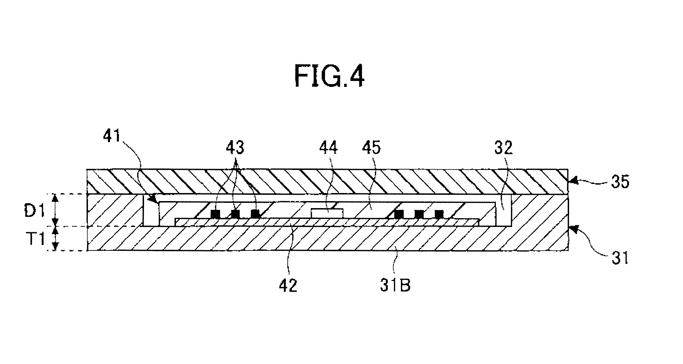

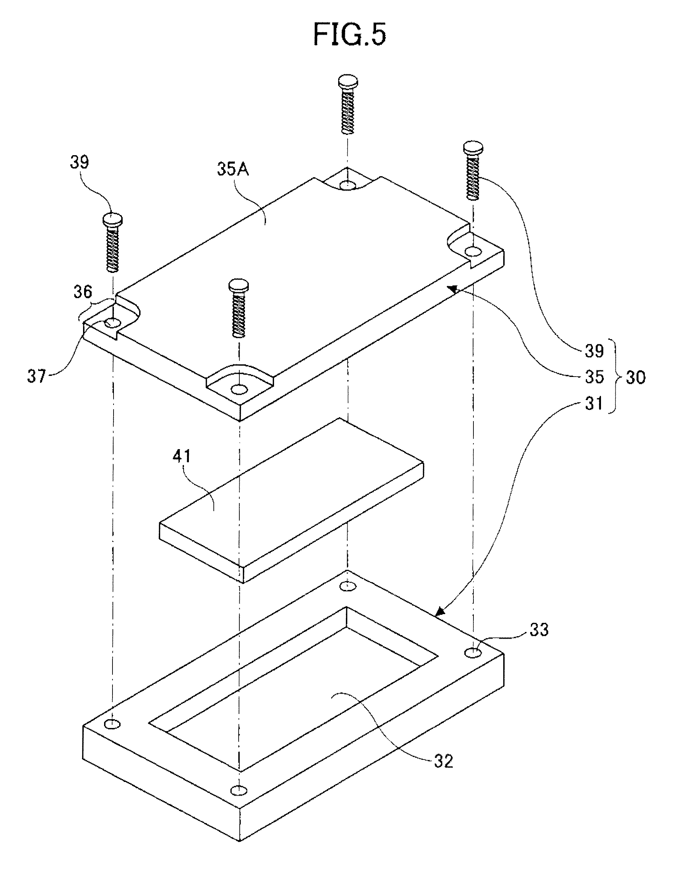

Referring to FIGS. 3 through 5, an IC tag housing case 30 as a first embodiment of the present invention will be described. FIG. 3 is a perspective view of the IC tag housing case according to the first embodiment, where an IC tag is housed; FIG. 4 is a cross-sectional view taken along a B - B line of a structure (the IC tag and the IC tag housing case) shown in FIG. 3. FIG. 5 is an exploded perspective view of the structure shown in FIG. 3. It is noted here in FIG. 4 that T1 represents a thickness of a bottom plate portion 31B of a case body (referred to as "thickness T1", hereinafter), and D1 represents a depth of a space portion 32 (referred to as "depth D1", hereinafter).

The IC tag housing case 30, while housing the IC tag 41 therein, is attached on an object 48 such as a product and a physical body (referred to as an "object", hereinafter) whose information is to be managed. The IC tag housing case 30 is generally composed of a lid body 35 that receives electromagnetic waves incoming from a reader/writer, and a case body 31. The IC tag housing case 30 that houses the IC tag 41 is attached on the object 48 so that the case body 31 contacts the object 48.

First, a configuration of the IC tag 41 will be described. The IC tag 41 is generally composed of a base material 42, an antenna 43, an IC chip 44, and an encapsulation resin 45 (see FIG. 4). The antenna 43 is provided on the base material 42. The IC chip 44 is provided on the base material 42 and connected to the antenna 43. The encapsulation resin 45 is provided so as to cover the antenna 43 and the IC chip 44 which are provided on the base material 42. The encapsulation resin 45 is to protect the antenna 43 and the IC chip 44. The IC tag 41 so configured is housed in the IC tag housing case 30 so that the antenna 43 opposes the lid body 35.

The lid body 35 which is flexible as described later has a recess portion 36 formed respectively at four corners thereof. In each of the recess portions 36, a through hole 37 is formed to allow a screw 39 to be inserted therethrough. The lid body 35 is mounted on the case body 31 by the screws 39 inserted into the through holes 37 so as to cover the space portion 32 of the case body 31. Therefore, the lid body 35 is detachably mounted on the case body 31.

Since the lid body 35 is detachably mounted on the case body 31 by the screws 39 as stated above, the IC tag 41 that has once been housed in the IC tag housing case 30 can be replaced with another IC tag, thereby allowing the IC tag housing case 30 to be generally used for plural IC tags. Therefore, production costs for the IC tag 41 can be reduced compared with the costs for the related art IC tag 15 having a high magnetic permeability material.

The lid body 35 prevents the IC tag 41 housed in the IC tag housing case 30 from being removed out from the IC tag housing case 30 and allows magnetic flux C (magnetic line) to reach the IC tag 41, the magnetic flux being generated by electromagnetic waves from a reader/writer 47. Therefore, the lid body 35 is desirably made of a material that allows the magnetic flux C to pass therethrough. As a material of the lid body 35, a resin such as polyethylene terephthalate (PET), polyethylene (PE), synthetic macromolecule polyamide (nylon), polystyrene (PS), polypropylene (PP) or the like and a synthetic rubber, for example, can be used. Use of such a material can provide flexibility to the lid body 35.

The case body 31 as a high magnetic permeability member is flexible and configured so as to have the space portion 32 and screw holes 33. The space portion 32 is to house the IC tag 41. The depth D1 of the space portion 32 may be from 0.5 mm to 5.0 mm, for example, depending on the thickness of the IC tag 41 to be housed.

The screw holes 33 are located so as to oppose the corresponding through holes 37 of the lid body 35. The screw holes 33 are provided so that the screws 39 are fastened thereinto when the lid body 35 is mounted on the case body 31.

The case body 31 is formed of a high magnetic permeability material, which is a material in which a high density of magnetic flux is induced even when a slight magnetic field is applied thereto. Specifically, the high magnetic permeability material has a high magnetic permeability µ, a high saturation magnetic flux density Bs, a low magnetic coercive force Hc, and a low hysteresis loss. Additionally, such a high magnetic permeability material has a property of attracting magnetic flux (magnetic field lines).

As the high magnetic permeability material, permalloy, sendust, ferrite, or amorphous-alloy, nickel, cobalt or the like, for example, may be used. Permalloy is a Ni-Fe alloy with Mo, Mn, Cu, Cr, or the like added. Sendust is a Si-Al-Fe alloy and has a high saturation magnetic flux density. Ferrite is a magnetic oxide including ferric ion Fe³⁺. Preferably, a high magnetic permeability material such as permalloy, nickel, cobalt, or the like is employed in this embodiment.

Permalloy has an extremely high direct current magnetic permeability and is relatively soft thereby being able to provide excellent material workability. Therefore, use of permalloy can provide flexibility to the case body 31 and thus allow the IC tag housing case 30 to be readily attached on a non-flat surface of the object. More specifically, as permalloy, SMS-PA, PB, PC (available from SUMITOMO METAL MINING CO., LTD.), supermalloy or the like can be used. Supermalloy is a material having a relative magnetic permeability of 800,000. As nickel, a pure nickel presenting excellent corrosion resistance under a corrosive environment may be used. Specifically, as the pure nickel, SMS-200, 201, HNi (also available from SUMITOMO METAL MINING CO., LTD.) can be used. As cobalt, a pure cobalt having a high ferromagnetic property may be used. Specifically, as the pure cobalt, SMS-HCo (available from SUMITOMO METAL MINING CO., LTD.) can be used. Additionally, as another high magnetic permeability material, a new high magnetic permeability material known as 1380 (available from Sumitomo 3M limited) may be used. The new high magnetic permeability material 1380 (available from Sumitomo 3M limited) has an extremely high relative magnetic permeability of 100,000 and is lightweight and soft thereby be able to provide excellent material workability.

By the way, a "high magnetic permeability material" here is a material having a high relative magnetic permeability (high relative magnetic permeability material). Thus, a material having a high relative magnetic permeability (high relative magnetic permeability material) is referred to as a "high magnetic permeability material" in the following explanation.

The thickness T1 of the case body 31 may be from 1.0 mm to 11.0 mm, for example, depending on types of high magnetic permeability material.

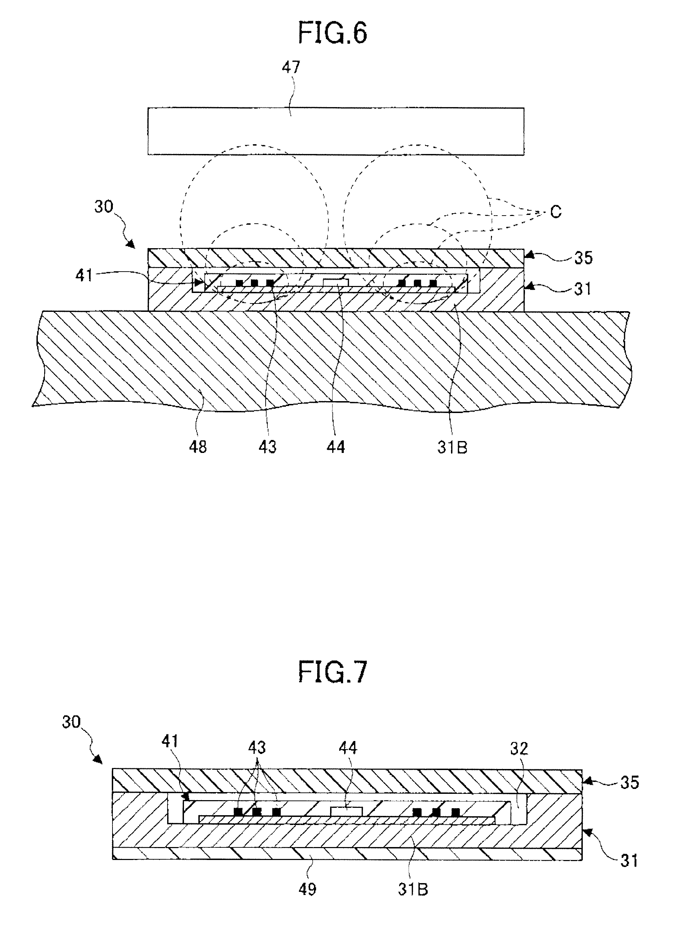

FIG. 6 is a schematic view of a flux distribution between the IC tag and the reader/writer when the IC tag housing case of the first embodiment having an IC tag housed is placed on a metal object.

As shown in FIG. 6, the IC tag housing case 30 according to this embodiment can allow magnetic flux C produced by electromagnetic waves generated from the reader/writer 47 to be converged on (or pass through) the IC tag 41 housed in the IC tag housing case 30, thereby enabling the IC tag to obtain sufficient electromotive force regardless of the material of the object and thus exchange information accurately between the IC tag 41 and the reader/writer 47, since the case body 31 is made of a high magnetic permeability material and the IC tag housing case 30 is attached on the metal object 48 so that the case body 31 contacts the metal object 48. In addition, even when another metal material exists near the IC tag 41, information can be accurately exchanged between the IC tag 41 and the reader/writer 47.

When a relative magnetic permeability of the high magnetic permeability material is equal to or less than 1,000, the density of magnetic flux through the high magnetic permeability material is decreased thereby to cause more leakage of the magnetic field, which causes eddy current loss and thus degrades reliability in communication. Therefore, the relative magnetic permeability is preferably equal to or more than 1,000. Additionally, since the relative magnetic permeability of supermalloy is 800,000, an upper limitation in the claims is 800,000.

As stated above, since the case body 31 is made of a high magnetic permeability material and disposed between the IC tag 41 and the metal object 48 when the IC tag housing case 30 is attached on the metal object 48, the magnetic flux C produced by electromagnetic waves generated from the reader/writer 47 is converged on (or passes through) the IC tag 41 housed in the IC tag housing case 30, regardless of the material of the object. Therefore, sufficient electromotive force is obtained and thus accurate exchanges of information are carried out between the IC tag 41 and the reader/writer 47.

FIG. 7 shows an IC tag housing case having an adhesive material 49 for attachment thereof on the object. As shown in FIG. 7, the IC tag housing case 30 can be attached on the metal object 48 by the adhesive material 49 provided on the bottom plate portion 31B of the case body 31.

By the way, although the lid body 35 is mounted on the case body 31 by the screws 39 in this embodiment, a mounting way of the lid body 35 on the case body 31 is not limited to the way of this embodiment, as long as the lid body 35 is configured as attachable to and detachable from the case body 31. For example, an adhesive material provided between the case body 31 and the lid body 35 may make the lid body 35 attachable to and detachable from the case body 31. Additionally, the IC tag housing case 30 of this embodiment is applicable to an IC tag including a first antenna connected to an IC chip and a second antenna provided outside of the first antenna.

### A Second Embodiment

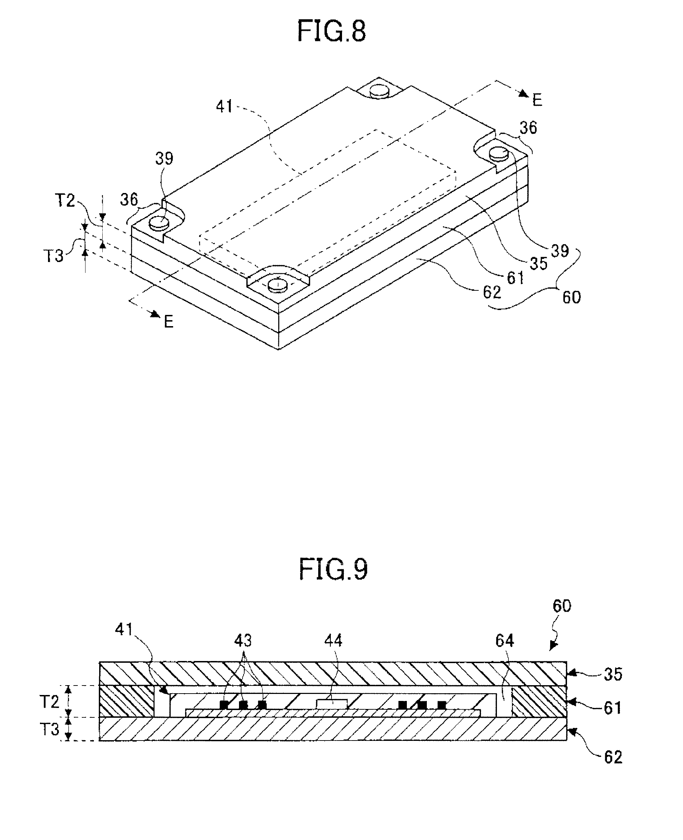

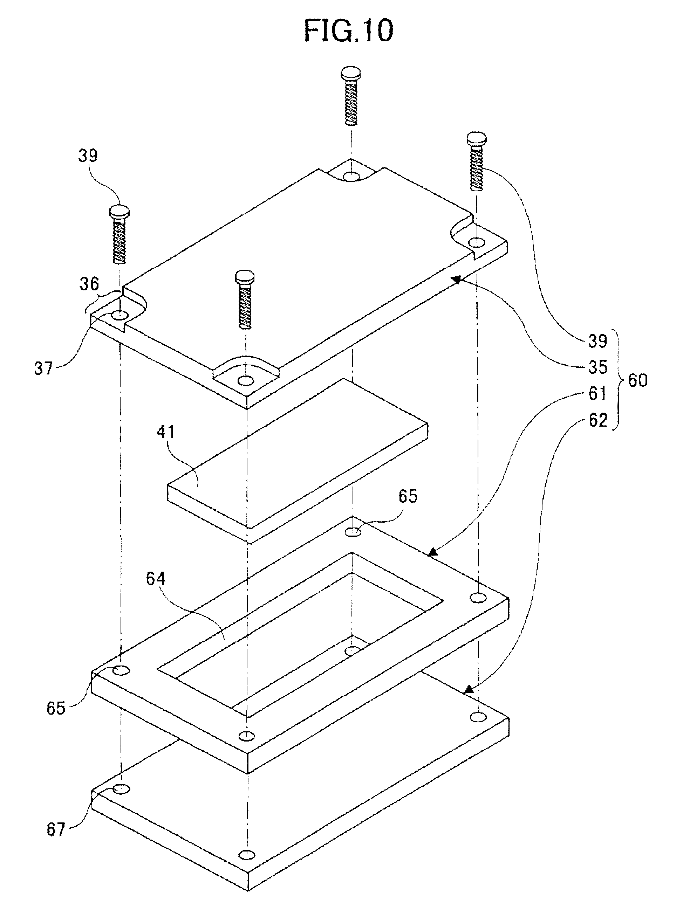

Referring to FIGS. 8 through 10, an IC housing case 60 according to a second embodiment of the present invention will be described. FIG. 8 is a perspective view of the IC tag housing case according to the second embodiment of the present invention, where an IC tag is housed; FIG. 9 is a cross-sectional view taken along an E-E line of a structure (the IC tag and the IC tag housing case) shown in FIG. 8. FIG. 10 is an exploded perspective view of the structure shown in FIG. 8. It is noted here in FIGS. 8 and 9 that T2 represents the thickness of a frame body 61 (referred to as "thickness T2", hereinafter), and T3 represents the thickness of a bottom plate 62 (referred to as "thickness T3", hereinafter). Additionally, in FIGS. 8 through 10, the same symbols are given to the same constituting portions as those in the structure (the IC tag 41 and the IC tag housing case 30) shown in FIG. 3.

The IC tag housing case 60, while housing the IC tag 41 therein, is attached on an object 48 such as a product and a physical body (referred to as an "object", hereinafter) whose information is to be managed. The IC tag housing case 60 is generally composed of the lid body 35, the screws 39, the frame body 61, and the bottom plate 62. The frame body 61 assumes the shape of a frame having a through portion 64 and is flexible. The through portion 64 provides a space where the IC tag 41 is housed when the frame body 61 is mounted on the bottom plate 62. In the frame body 61, there are formed screw holes 65 at positions opposing the screw holes 37. The screw holes 65 allow the screws 39 to be inserted therethrough and help the lid body 35 to be mounted on the frame body 61. As a material of the frame body 61, a resin such as polyethylene terephthalate (PET), polyethylene (PE), synthetic macromolecule polyamide (nylon), polystyrene (PS), polypropylene (PP) or the like and a synthetic rubber, for example, may be used. Use of such a material can provide flexibility to the lid body 35. The thickness T2 of the frame body 61 may be from 0.5 mm to 5.0 mm, for example, depending on the thickness of the IC tag 41 to be housed therein.

The bottom plate 62 is a plate-shaped high magnetic permeability member made of a high magnetic permeability material and has flexibility. The IC tag housing case 60 is attached on the object so that the bottom plate 62 is disposed between the IC tag 41 and the object. The bottom plate 62 can be made of a high magnetic permeability material recited for the first embodiment. The bottom plate 62 is provided with screw holes 67 at positions opposing the screw holes 65 formed in the frame body 61. To the screw holes 67 are fastened the screws 39, which allows the lid body 35 and the frame body 61 to be attachable to and detachable from the bottom plate 62. The thickness T3 of the bottom plate 62 may be from 0.3 mm to 5.0 mm, for example.

As stated, since the lid body 35 and the frame plate 61 are configured as attachable to and detachable from the bottom plate 62 by the screws 39, the IC tag 41 that has once been housed in the IC tag housing case 60 can be replaced with another IC tag, thereby allowing the IC tag housing case 60 to be generally used for plural IC tags. Therefore, production costs for the IC tag 41 can be reduced compared with the costs for the related art IC tag 15 having a high magnetic permeability material.

As above, since the bottom plate 62 is configured of a high magnetic permeability material and disposed between the IC tag 41 and the object when the IC tag housing case 60 is attached on the object, magnetic flux C produced by electromagnetic waves generated from the reader/writer 47 is converged on (or passes through) the IC tag 41 housed in the IC tag housing case 60, regardless of the material of the object. Therefore, sufficient electromotive force is obtained and thus accurate exchanges of information are carried out between the IC tag 41 and the reader/writer 47.

By the way, although the lid body 35 and the frame body 61 are mounted to the bottom plate 62 by the screws 39 in this embodiment, a mounting way of the lid body 35 and the frame body 61 to the bottom plate 62 is not limited to the way of this embodiment, as long as the lid body 35 and the frame body 61 are configured as attachable to and detachable from the bottom plate 62. In addition, the bottom plate 62 may be provided with an adhesive material on a surface thereof opposing the object, and the IC tag housing case 60 may be attached on the object by the adhesive material. Moreover, the IC tag housing case 60 is applicable to an IC tag including a first antenna connected to an IC chip and a second antenna provided outside of the first antenna.

### A Third Embodiment

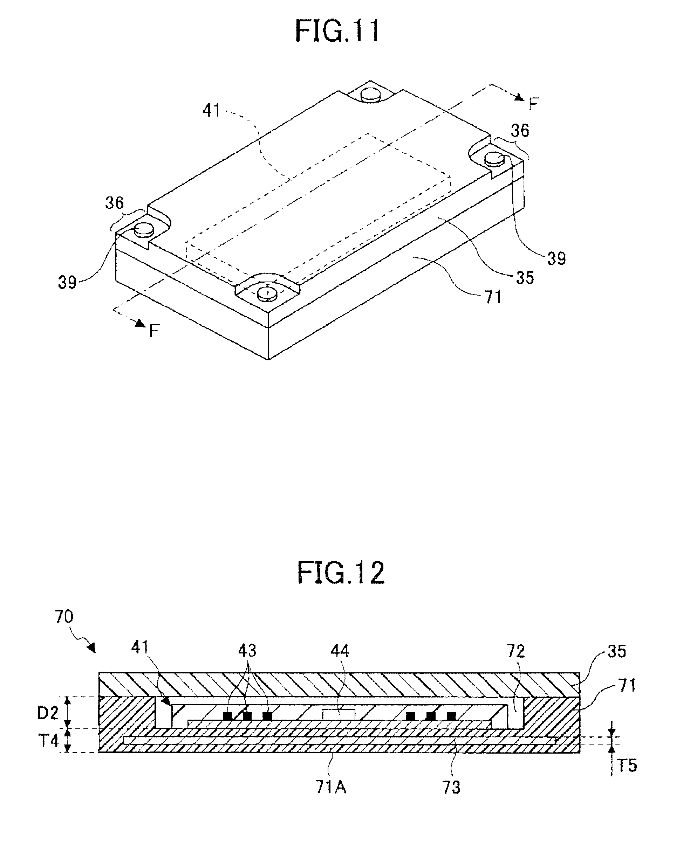

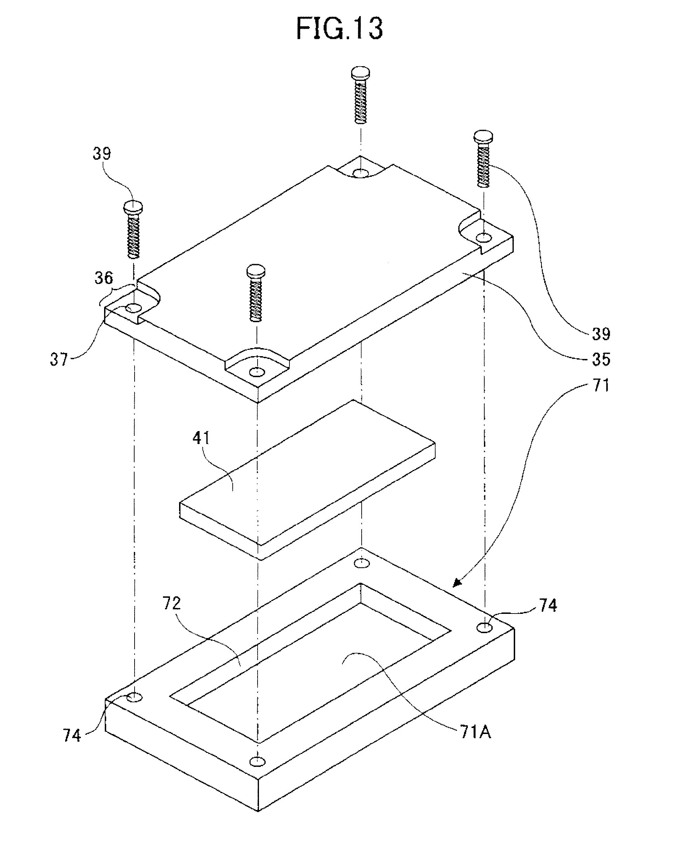

Referring to FIGS. 11 through 13, there will be described an IC tag housing case 70 according to a third embodiment of the present invention. FIG. 11 is a perspective view of the IC tag housing case, according to the third embodiment, in which an IC tag is housed; FIG. 12 is a cross-sectional view taken along an F - F line of a structure (the IC tag and the IC tag housing case) shown in FIG. 11. FIG. 13 is an exploded perspective view of the structure shown in FIG. 11. It is noted here in FIG. 12 that D2 represents the depth of a space portion 72 (referred to as "depth D2", hereinafter), and T4 is the thickness of a bottom plate portion 71A of a case body 71 (referred to as "thickness T4", hereinafter), and T5 represents the thickness of a high magnetic permeability member 73 (referred to as "thickness T5", hereinafter). Additionally, in FIGS. 11 through 13, the same symbols are given to the same constituting portions as those in the structure (the IC tag 41 and the IC tag housing case 30) shown in FIG. 3.

The IC tag housing case 70, while housing the IC tag 41 therein, is attached on an object 48 such as a product and a physical body (referred to as an "object", hereinafter) whose information is to be managed. The IC tag housing case 70 is generally composed of the lid body 35, the screws 39, the case body 71, and the high magnetic permeability member 73. The IC tag housing case 70 is attached on the object so that the case body 71 is disposed between the IC tag 41 and the object 48.

The case body 71 is flexible and configured so as to have the space portion 72 that is to house the IC tag 41, and screw holes 74 that allow the screws 39 to be fastened thereinto. The depth D2 of the space portion 72 may be from 0.5 mm to 5.0 mm, for example, depending on the thickness of the IC tag 41 to be housed.

The screw holes 74 are formed at positions opposing the through holes 37 formed in the lid body 35. The screw holes 74 allow the screws 39 to be fastened thereinto when the lid body 35 is mounted on the case body 71. The thickness T4 of the bottom plate portion 71A of the case body 71 may be from 0.3 mm to 0.5 mm, for example.

As a material of the frame body 71, a resin such as polyethylene terephthalate (PET), polyethylene (PE), synthetic macromolecule polyamide (nylon), polystyrene (PS), polypropylene (PP) or the like and a synthetic rubber may be used, for example.

The high magnetic permeability member 73 is a plate-shaped member made of a high magnetic permeability material and has flexibility. The high magnetic permeability member 73 is embedded within the bottom plate portion 71A of the case body 71 so as to oppose the IC tag 41. The high magnetic permeability material to be used is recited for the first embodiment. The thickness T5 of the high magnetic permeability member 73 may be from 0.3 mm to 4.0 mm, for example.

As stated, since the high magnetic permeability member 73 is embedded within the bottom plate portion 71A of the case body 71 so as to oppose the IC tag 41 which then opposes the case body 71 when the IC tag housing case 70 is attached on the object, magnetic flux C produced by electromagnetic waves generated from the reader/writer 47 is converged on (or passes through) the IC tag 41 housed in the IC tag housing case 70, regardless of the material of the object. Therefore, sufficient electromotive force is obtained and thus accurate exchanges of information are carried out between the IC tag 41 and the reader/writer 47.

By the way, although the lid body 35 is mounted on the case body 71 by the screws 39 in this embodiment, the mounting way of the lid body 35 on the case body 71 is not limited to the way of this embodiment, as long as the lid body 35 is configured as attachable to and detachable from the case body 71. Additionally, the IC tag housing case 70 is applicable to an IC tag including a first antenna connected to an IC chip and a second antenna provided outside of the first antenna.

### A Fourth Embodiment

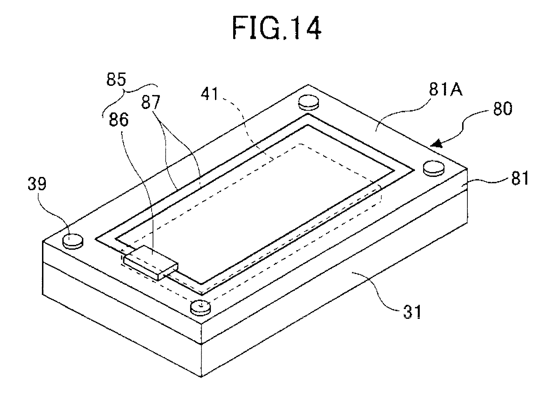

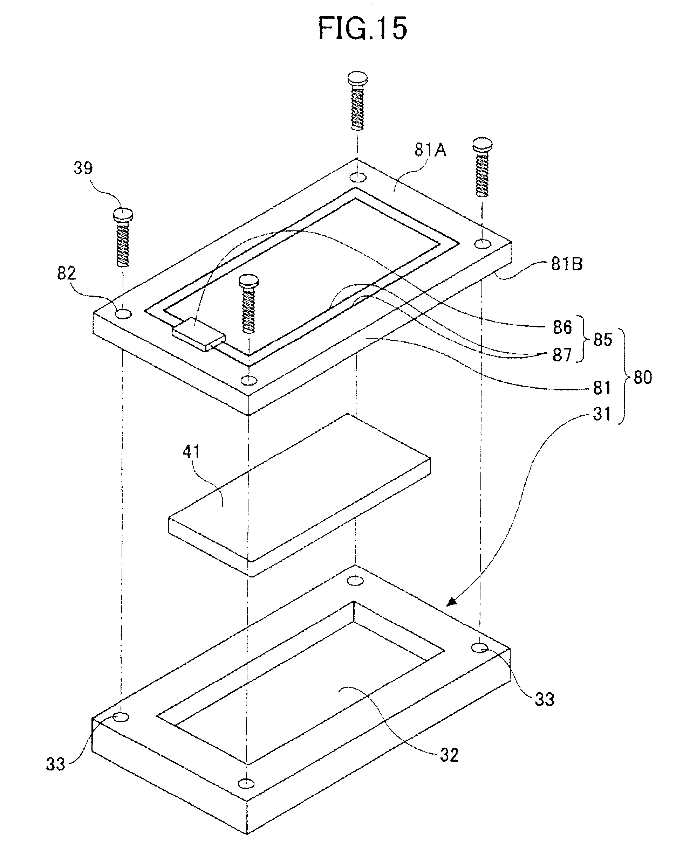

Referring to FIGS. 14 and 15, an IC tag housing case 80 as a fourth embodiment of the present invention will be described. FIG. 14 is a perspective view of the IC tag housing case according to the fourth embodiment, where an IC tag is housed; and FIG. 15 is an exploded perspective view of a structure (the IC tag and the IC tag housing case) shown in FIG. 14. Additionally, in FIGS. 14 and 15, the same symbols are given to the same constituting portions as those in the structure (the IC tag 41 and the IC tag housing case 30) shown in FIG. 3.

The IC tag housing case 80, while housing the IC tag 41 therein, is attached on an object 48 such as a product and a physical body (referred to as an "object") whose information is to be managed. The IC tag housing case 80 is generally composed of the case body 31, the screws 39, a lid body 81, and a waveguide antenna 85.

The lid body 81 is a plate-shaped member having flexibility and has through holes 82 at positions opposing screw holes 33 of the case body 31. The through holes 82 allow the screws 39 to be inserted therethrough when the lid body 81 is mounted on the case body 31. As a material of the lid body 81, a resin such as polyethylene terephthalate (PET), polyethylene (PE), synthetic macromolecule polyamide (nylon), polystyrene (PS), polypropylene (PP) or the like and synthetic rubber may be used, for example. Use of such a material can provide flexibility to the lid body 81.

The waveguide antenna 85 is composed of a capacitance portion 86 as a passive element and an antenna portion 87 as a passive element. The capacitance portion 86 is provided on an upper surface 81A of the lid body 81 and connected electrically to the antenna portion 87. The antenna portion 87 as a passive element is arranged on the upper surface 81A so as to encircle the antenna 43 provided in the IC tag 41.

As stated, since the waveguide antenna 85 having the capacitance 86 and the antenna 87 is provided on the upper surface 81A of the lid body 81 and receives electromagnetic waves from the reader/writer 47 thereby to produce an electromagnetic coupling between the antenna 43 of the IC tag 41 and the waveguide antenna 85, the coverage distance between the reader/writer 47 and the IC tag 41 can be expanded, thereby providing better exchanges of information therebetween.

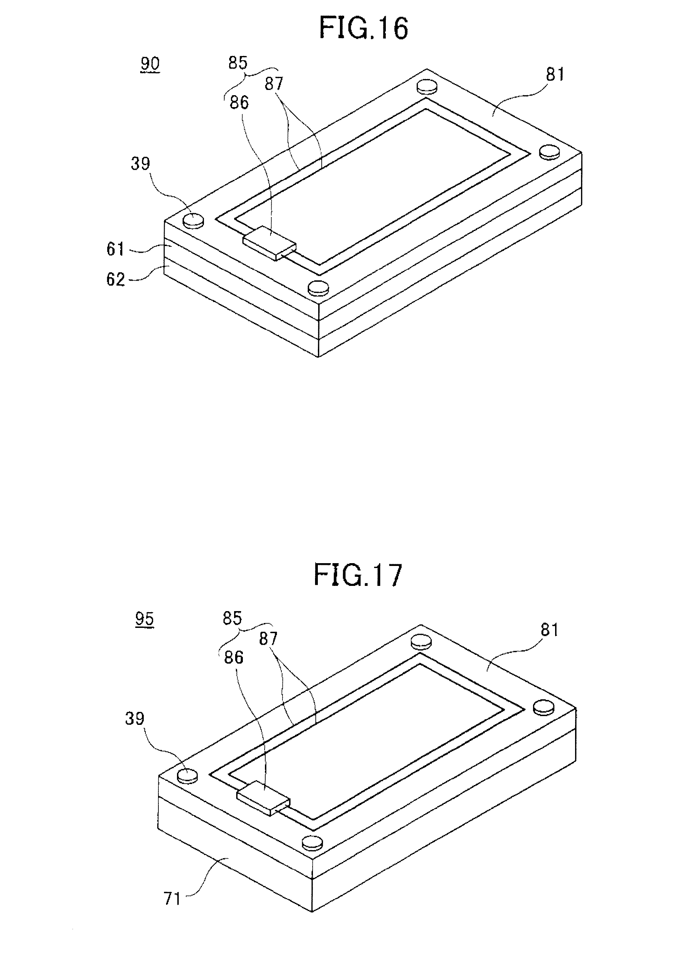

FIGS. 16 and 17 are perspective views of other IC tag housing cases each including a waveguide antenna. As shown in FIG. 16, an IC tag housing case 90 can be configured by combining the lid body 81 on which the waveguide antenna 85 is arranged, the frame body 61, and the bottom plate 62 as described for the second embodiment. Additionally, an IC tag housing case 95 can be configured by combining the lid body 81 on which the waveguide antenna 85 is arranged and the case body 71 having the high magnetic permeability member 73 embedded therein, as described for the third embodiment. The IC tag housing cases 90, 95 can exhibit the same effects as the effects by the IC tag housing case 80 of this embodiment. By the way, the IC tag housing cases 80, 90, 95 may be provided with an waveguide antenna formed on a reverse surface 81B of the lid body 81, instead of the waveguide antenna 85 formed on the upper surface 81A of the lid body 81. Moreover, the IC tag housing cases 80, 90, 95 are applicable to a first antenna connected to an IC chip and a second antenna provided outside of the first antenna.

By the way, the present invention is not limited to the embodiments specifically disclosed herein, but various alterations and modifications may be applied without departing from the scope of the invention set forth in accompanying claims.

## Claims

1. An IC tag housing case comprising a high magnetic permeability member formed of a high magnetic permeability material and disposed so as to oppose a portion in which an IC tag may be placed.

2. The IC tag housing case of claim 1, wherein a relative magnetic permeability of the high magnetic permeability material is from 1,000 to 800,000.

3. The IC tag housing case of claim 1, wherein the high magnetic permeability material is at least one of a group consisting of permalloy, nickel, and cobalt.

4. The IC tag housing case of claim 1, wherein an antenna composed of a passive component is provided on a face where the high magnetic permeability member is absent.

5. An IC tag housing case comprising:
a case body formed of a high magnetic permeability material and defining a space portion in which an IC tag may be placed; and
a lid body arranged so as to cover the space portion and subjected to an incoming electromagnetic wave.

6. The IC tag housing case of claim 5, wherein a relative magnetic permeability of the high magnetic permeability material is from 1,000 to 800,000.

7. The IC tag housing case of claim 5, wherein the high magnetic permeability material is at least one of a group consisting of permalloy, nickel, and cobalt.

8. The IC tag housing case of claim 5, wherein the lid body is configured as attachable to and detachable from the case body.

9. The IC tag housing case of claim 5, wherein the lid body is provided with an antenna composed of a passive component.

10. An IC tag housing case comprising:
a case body defining a space portion in which an IC tag may be placed;
a lid body arranged to cover the space portion and subjected to an incoming electromagnetic wave; and
a high magnetic permeability member formed of a high magnetic permeability material and disposed in the case body so as to oppose the space portion.

11. The IC tag housing case of claim 10, wherein a relative magnetic permeability of the high magnetic permeability material is from 1, 000 to 800, 000.

12. The IC tag housing case of claim 10, wherein the high magnetic permeability material is at least one of a group consisting of permalloy, nickel, and cobalt.

13. The IC tag housing case of claim 10, wherein the lid body is configured as attachable to and detachable from the case body.

14. The IC tag housing case of claim 10, wherein the lid body is provided with an antenna composed of a passive component.
